# DEMANDE DE BREVET EUROPEEN

(11) **EP 2 698 283 A1**
(43) Date de publication de la demande: **19.02.2014**
(21) Numéro de dépôt: 12180948.7
(22) Date de dépôt: 18.08.2012
(51) Int. Cl.: B60R 9/048, B60P 7/08

(54) **Galerie de toit**

(71) Demandeur: ROLIX S.p.r.l., 5310 Waret la Chaussée (Eghezee) (BE)
(72) Inventeur: Burnick, Frank, B 5310 Waret la Chaussée (Eghezée) (BE)
(74) Mandataire: Decamps, Alain René François

(57) **Abrégé**

La présente invention concerne une galerie de toit pour véhicule munie d'un système d'arrimage d'objets comprenant une sangle et un mini-treuil à cliquet coulissant dans un rail solidaire de la galerie.

## Description

La présente invention concerne une galerie de toit pour véhicule.

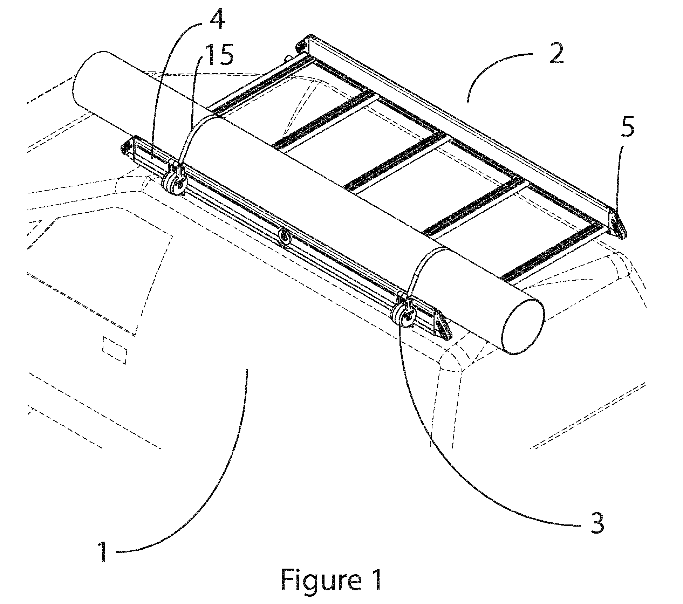

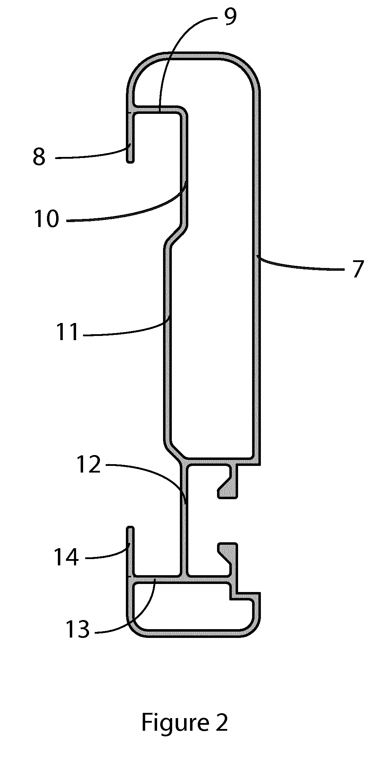

On connaît le brevet US 4,900,203 qui décrit aux figures 1 et 2 un système d'arrimage de charges sur un véhicule de type pick-up comprenant un cadre sur lequel sont boulonnés des treuils munis de sangles destinées à envelopper les charges et à les repousser et les maintenir contre un coin formé par une traverse du cadre et un montant vertical disposés à angle droit.

Ce système n'est cependant pas adapté aux galeries de toit des véhicules automobiles qui ne possèdent généralement pas de montants verticaux. Par ailleurs, il ne convient que pour le transport de charges dont la longueur correspond au moins à la distance d'espacement entre les treuils.

L'invention remédie aux inconvénients des systèmes connus en fournissant une galerie de toit pour véhicule munie d'un système d'arrimage d'objets à transporter comprenant au moins une sangle dont une des extrémités est enroulée sur un mini-mini-treuil fixé sur la galerie d'un côté de l'objet posé sur celle-ci; selon cette galerie l'autre extrémité de la sangle est munie d'un crochet qui peut s'arrimer sur la galerie et le mini-treuil coulisse librement dans un rail solidaire de la galerie qui longe un bord de celle-ci parallèle à une face latérale du véhicule.

Par rapport aux systèmes connus, l'invention présente les avantages suivants :
- elle s'adapte à tous les modèles de galeries de toit pour véhicules;
- elle convient pour le transport d'objets de forme et de longueur diverses;
- Les mini-treuils peuvent très facilement être ajustés en nombre et en position en fonction de la morphologie des objets à transporter;
- les mini-treuils peuvent aisément être extraits des rails sans outillage particulier pour être utilisés comme des systèmes de serrage du type sangle à cliquet universelle.

Par galerie de toit pour véhicule, on entend désigner tout type de système de transport de charges ou d'objets au-dessus du toit des véhicules. Les véhicules peuvent être des véhicules automobiles, par exemple des camionnettes, camions ou voitures de tourisme et breaks. Les véhicules peuvent aussi être des véhicules sans moteur, comme des remorques.

Selon l'invention, la galerie de toit est munie d'un système d'arrimage d'objets à transporter. Un tel système d'arrimage a pour fonction de maintenir les objets sur la galerie pendant le transport et d'éviter aussi bien leur perte que leur dégradation suite à des mouvements incontrôlés de ces objets par rapport aux éléments constituant la galerie. Selon l'invention, le système d'arrimage comprend au moins une sangle. Celle-ci est une bande de matière souple qui peut recouvrir un objet en épousant sa morphologie extérieure ou encore être enroulée autour d'un objet. Comme matière souple pour la réalisation de la sangle on peut trouver des textiles tissés ou tricotés, des textiles non tissés ou encore des bandes en matière plastique souple. Les fibres des textiles peuvent indifféremment être naturelles ou artificielles. Des sangles en tissu de nylon ou de tissus en polyester ont donné de bons résultats.

Selon l'invention, une extrémité de la sangle est enroulée autour d'un mini-treuil. Le mini-treuil de la galerie conforme à l'invention possède un tambour autour duquel on enroule une extrémité de la sangle de manière à la resserrer autour de l'objet à transporter. Un dispositif à cliquet empêche la détente de la sangle et permet de la maintenir serrée. Le mini-treuil est fixé sur la galerie d'un côté de l'objet à transporter. Par fixation, on entend être solidaire du rail de la galerie.

Selon une première caractéristique de l'invention, la sangle est munie d'un crochet à son extrémité opposée à celle du mini-treuil. Ce crochet peut s'arrimer à la galerie.

Selon l'invention, le crochet munissant la sangle est arrimé à un point fixe choisi parmi un point du montant au bord latéral de la galerie opposé à celui sur lequel est fixé le mini-treuil et un point sur le bas du mini-treuil lui-même. Dans la première configuration d'arrimage, l'objet à transporter est appliqué contre une ou plusieurs traverses de la galerie reliant les montants latéraux de celle-ci. Dans la deuxième configuration, la sangle est enroulée autour de l'objet à transporter et le crochet revient s'arrimer sur le mini-treuil.

Par extension, le vocable crochet peut aussi recouvrir d'autres systèmes d'arrimage à la galerie connus par eux-mêmes, comme des systèmes de nouage, des oeillets à enfiler sur des protubérances de la galerie, des systèmes d'accrochage de type Velcro^{®} ...

Selon une deuxième caractéristique de la galerie de toit conforme à l'invention, le mini-treuil coulisse librement dans un rail solidaire de la galerie qui longe un bord de celle-ci parallèle à une face latérale du véhicule. Tout en restant solidaire de la galerie, le mini-treuil peut être déplacé selon un unique degré de liberté, dans une direction parallèle au rail et à une face du véhicule.

Selon une forme de réalisation particulière de l'invention, le mini-treuil comprend un dispositif de blocage de sa position dans le rail de la galerie, c'est-à-dire un dispositif qui l'empêche de se mouvoir librement par lui-même dans ce rail.

Plus particulièrement, le dispositif de blocage est un dispositif à friction. Ce dispositif à friction peut être réalisé au moyen d'écarteurs situé sur un côté du mini-treuil et qui s'appuient sur une piste plane intérieure au rail en faisant ressort en flexion contre celle-ci. Le dispositif à friction comprend au moins un de ces écarteurs. De préférence, il comprend deux écarteurs situés sur le boîtier du mini-treuil.

Le dispositif de blocage peut aussi, alternativement, être du type à vis de serrage. Dans cette variante, une vis une vis engagée dans un pas fileté solidaire du mini-treuil vient appuyer à son extrémité sur une piste plane intérieure au rail.

Avantageusement, la galerie conforme à l'invention comprend deux rails longeant chacun un des bords de la galerie parallèle avec les faces latérales du véhicule. De préférence, les deux rails sont munis chacun d'au moins un mini-treuil muni d'une sangle.

Avantageusement aussi, le mini-treuil et la sangle peuvent être dissociés de la galerie afin de pouvoir aussi être utilisés indépendamment de celle-ci pour sécuriser des objets. Dans cette configuration, les mini-treuils se comportent comme des sangles à cliquet universelles classiques.

Selon l'invention, la galerie est réalisée dans un matériau choisi parmi les métaux, les alliages métalliques, les matières plastiques, le bois, les matériaux composites et les associations d'au moins deux de ces matériaux.

Les matériaux composites comprennent les matières plastiques chargées de fibres comme, par exemple les fibres de verre, les fibres naturelles minérales ou les fibres de bois.

Les métaux comprennent l'aluminium, le fer, le cuivre, le magnésium, le zinc, le chrome, le nickel, le tungstène, le manganèse, le titane, le vanadium, le molybdène, le ruthénium, le lanthane, le cérium, le néodyme, le rhénium, l'osmium, l'étain, le plomb, le bismuth, l'erbium, le silicium, le germanium, l'indium et le gallium. Certains métaux peuvent se retrouver en proportions majoritaires ou même à 100 % de la composition de la galerie. D'autres ne se retrouvent parfois qu'en proportion minoritaire, voire très minoritaire. Parmi les métaux en proportion majoritaire, on trouve, par exemple, le fer, l'aluminium et le chrome. Parmi les métaux en proportions minoritaires, on peut trouver, par exemple, le tungstène, le manganèse et le molybdène.

Les alliages métalliques comprennent les alliages d'aluminium, le laiton, les alliages d'étain, le bronze, les aciers doux et les aciers à basse teneur en carbone, les aciers inoxydables, les alliages de plomb et les alliages chrome-nickel.

Les matières plastiques qui peuvent faire partie des matières constituant la galerie conforme à l'invention comprennent les matières thermoplastiques et les matières thermodurcissables.

Parmi ces matières plastiques, les matières plastiques thermoplastiques comprennent les polyesters tels que les polytéréphtalates d'éthylène (PET), les polytéréphtalates de butylène (PBT), les polyamides tels que les polyphtalamides (PPA) et les copolymères acrylonitrile-butadiène-styrène (ABS).

Quant aux matières plastiques thermodurcissables, elles comprennent les polyépoxydes (EP) et les élastomères vulcanisés tels que les caoutchoucs styrène-butadiène (SBR).

Dans la galerie selon l'invention, toutes les pièces faisant partie de la galerie ne sont généralement pas réalisées dans le même matériau. On préfère les métaux ou les alliages métalliques pour les rails et les traverses de toit.

De même, on préfère les matières plastiques pour le mini-treuil. Parmi les matières thermoplastiques, les PET commercialisés par Dupont de Nemours sous la marque RYNITE^{®} ont donné de bons résultats.

Selon une variante de la galerie conforme à l'invention, elle comprend aussi au moins un accessoire de transport d'objets tubulaires constitué d'un collier de serrage et d'une base coulissant dans un rail de la galerie.

Selon une autre variante de la galerie conforme à l'invention, elle peut aussi comprendre des accessoires tels que des bouchons amovibles en matière plastique ou en composites terminant les rails à ses extrémités, ainsi que des catadioptres améliorant la signalisation du volume du véhicule la nuit tombée.

Les figures 1 à 4 sont données dans le but d'illustrer l'invention par un exemple pratique de réalisation, sans vouloir en limiter d'aucune manière sa portée.

La figure 1 représente un véhicule automobile (1) de type camionnette équipé de la galerie de toit (2) conforme à l'invention. On y distingue un mini-treuil (3) qui a été glissé dans le rail (4) solidaire de la galerie (2) et longeant le bord de celle-ci parallèle à la face gauche du véhicule (1). On y distingue aussi un bouchon (5) en matière plastique.

La figure 2 est une coupe du montant latéral (7) de la partie gauche de la galerie vue de l'arrière du véhicule (1). Les éléments (8) à (14) forment un rail dans lequel peut coulisser le mini-treuil (3). On y distingue la surface plane (11) sur laquelle deux écarteurs du mini-treuil viennent former un dispositif de blocage par ressort en flexion.

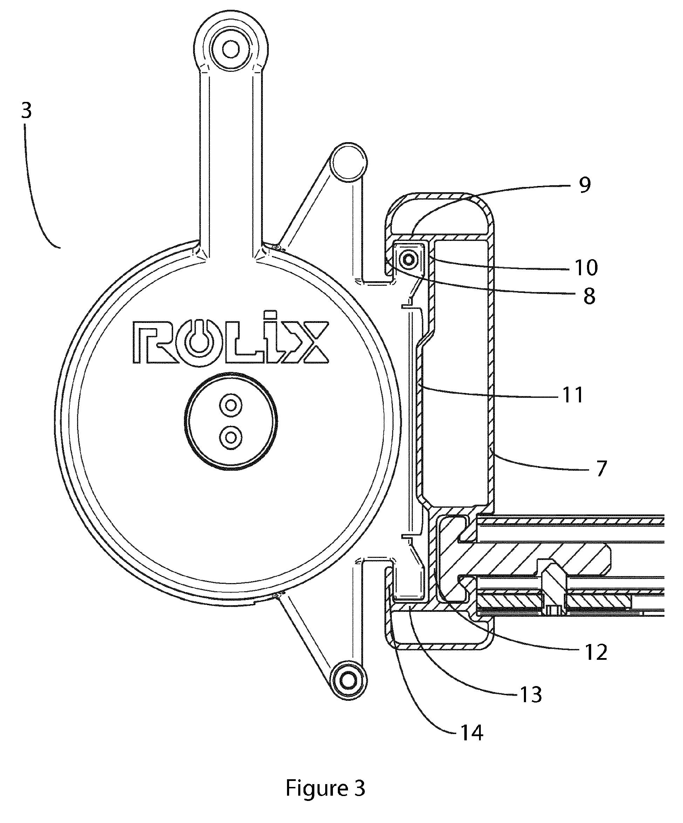

La figure 3 montre le mini-treuil (3) coulissant dans le rail formé par les éléments (8) à (14).

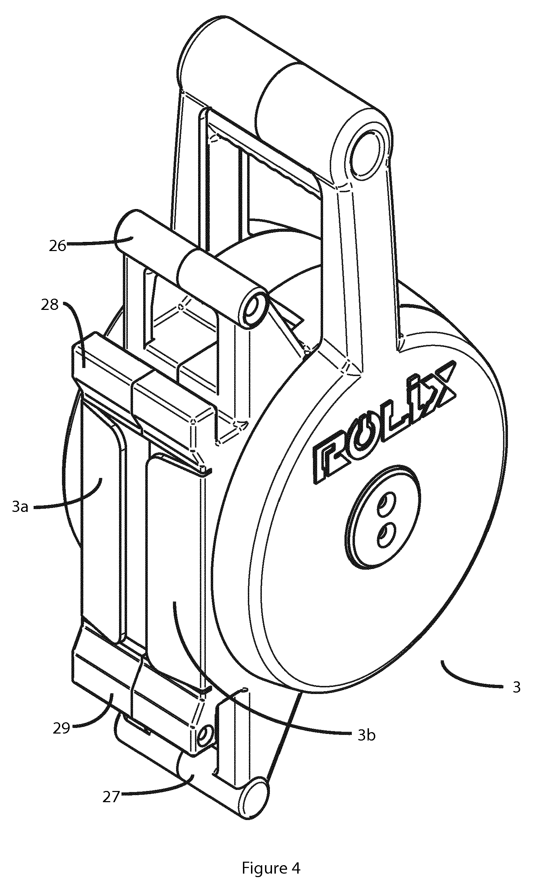

La figure 4 illustre le dispositif de blocage du mini-treuil (3) constitué par les deux écarteurs (3a) et (3b). On y distingue aussi la barre d'accrochage (27) du crochet et les coulisseaux (28) et (29) qui s'insèrent dans le rail.

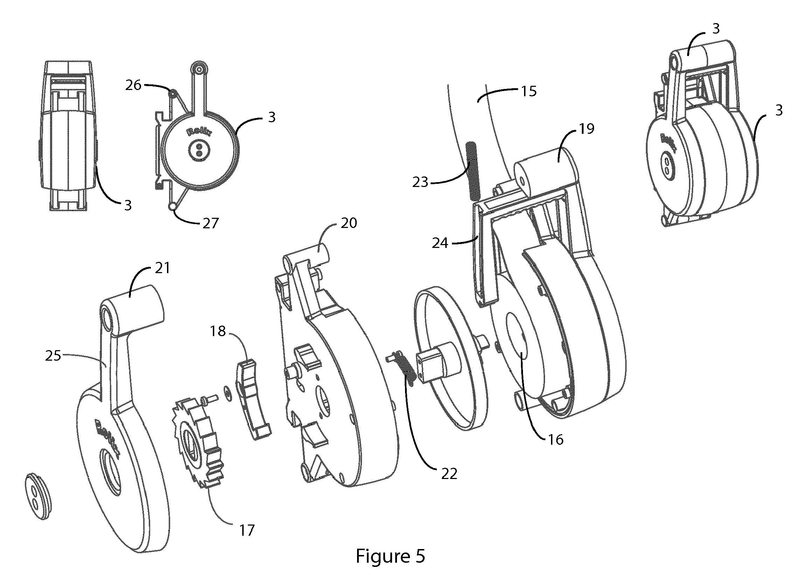

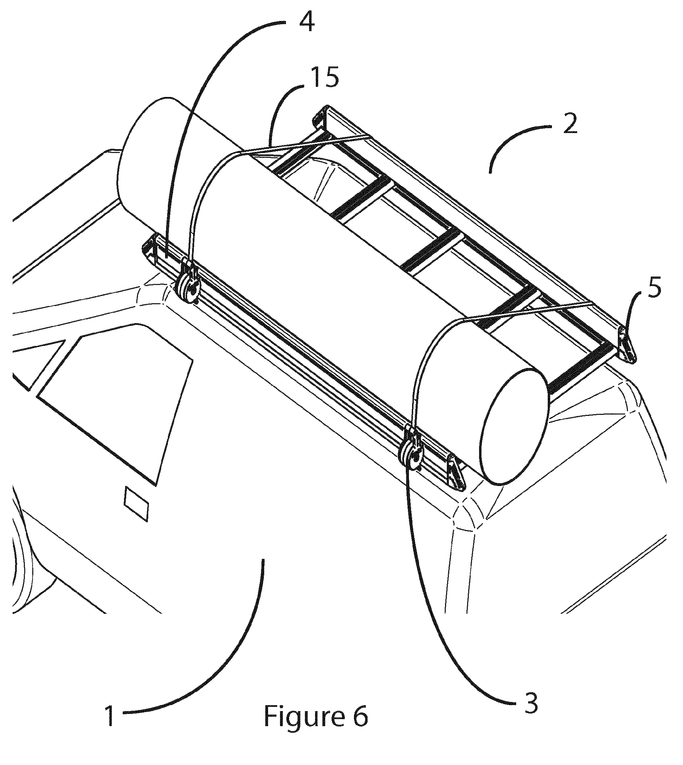

La figure 5 illustre les détails du mini-treuil (3) en schéma éclaté. On y distingue la sangle (15) qui s'enroule autour du tambour (16). Un système de roue dentée (17) à cliquet (18) empêche la détente de la sangle qui peut être tendue par manoeuvre de la poignée (19, 20 et 21) formée par les extrémités des deux flasques extérieures (19) et (21) et la flasque intérieure (20) du boîtier du mini-treuil (3). Un ressort (22) maintient un effort de moment de torsion sur la roue dentée par rapport au tambour (16) et un autre ressort (23) maintient le cliquet (18) au contact d'une dent de la roue dentée (17). Le ressort (23) coulisse dans une chambre formée par une rainure dans l'intérieur du manche (25) supportant la poignée (21) de la flasque extérieure du boîtier du mini-treuil (3) et une autre rainure (24) située dans une pièce en forme de U renversé pouvant coulisser sur le manche (25). En comprimant ce ressort (23) par soulèvement de la pièce en U, on peut libérer le cliquet (18) de la roue dentée (17) et ainsi permettre la rotation du tambour (16) en sens inverse et détendre la sangle (15). Un axe (26) solidaire du boîtier et pivotant librement sert de guide pour la sangle (15).

Les mêmes références chiffrées ont été gardées pour les éléments qui se correspondent dans les 5 figures.

## Revendications

1. Galerie de toit pour véhicule munie d'un système d'arrimage d'objets à transporter comprenant au moins une sangle dont une des extrémités est enroulée sur un mini-treuil fixé sur la galerie d'un côté de l'objet posé sur celle-ci, **caractérisée en ce que** l'autre extrémité de la sangle est munie d'un crochet qui peut s'arrimer à la galerie et que le mini-treuil coulisse librement dans un rail solidaire de la galerie qui longe un bord de celle-ci parallèle à une face latérale du véhicule.

2. Galerie selon la revendication précédente, **caractérisée en ce que** le mini-treuil comprend un dispositif de blocage de sa position dans le rail.

3. Galerie selon la revendication précédente, **caractérisée en ce que** le dispositif de blocage est choisi parmi un dispositif à friction et un dispositif à vis de serrage.

4. Galerie selon la revendication précédente, **caractérisée en ce que** le dispositif à friction comprend au moins un écarteur situé sur un côté du mini-treuil et qui s'appuie sur une piste plane intérieure au rail en faisant ressort en flexion contre celle-ci.

5. Galerie selon la revendication précédente, **caractérisée en ce que** le mini-treuil comprend deux écarteurs situés de part et d'autre du boîtier du mini-treuil.

6. Galerie selon la revendication 3, **caractérisée en ce que** le dispositif à vis de serrage comprend une vis engagée dans un pas fileté solidaire du mini-treuil et vient appuyer à son extrémité sur une piste plane intérieure au rail.

7. Galerie selon une quelconque des revendications précédentes, **caractérisée en ce qu'**elle comprend deux rails longeant chacun un des bords de la galerie parallèle avec les faces latérales du véhicule.

8. Galerie selon la revendication précédente, **caractérisée en ce que** les deux rails sont munis chacun d'au moins un mini-treuil muni d'une sangle.

9. Galerie selon une quelconque des revendications précédentes, **caractérisée en ce que** le crochet munissant la sangle est arrimé à un point fixe choisi parmi un point quelconque du bord latéral de la galerie opposé à celui sur lequel est fixé le mini-treuil et un point sur le bas du mini-treuil lui-même.

10. Galerie selon une quelconque des revendications précédentes, **caractérisée en ce que** le mini-treuil et la sangle sont dissociables de la galerie afin de pouvoir être utilisés indépendamment de celle-ci pour sécuriser des objets.

11. Galerie selon une quelconque des revendications précédentes, **caractérisée en ce qu'**elle est réalisée dans un matériau choisi parmi les métaux, les alliages métalliques, les matières plastiques, le bois, les matériaux composites et les associations d'au moins deux de ces matériaux.

12. Galerie selon une quelconque des revendications précédentes, **caractérisée en ce qu'**elle comprend au moins un accessoire de transport d'objets tubulaires constitué d'un collier de serrage et d'une base coulissant dans un rail de la galerie.

13. Galerie selon la revendication précédente, **caractérisée en ce que** la base du collier de serrage est munie d'un dispositif de blocage identique à celui du mini-treuil.
